# EUROPÄISCHE PATENTANMELDUNG

(11) **EP 1 876 041 A2**
(43) Veröffentlichungstag der Anmeldung: **09.01.2008**
(21) Anmeldenummer: 07007892.8
(22) Anmeldetag: 18.04.2007
(51) Int. Cl.: B60G 7/02, F16F 1/387, B62D 17/00

(54) **Radaufhängung für Kraftfahrzeuge**

(30) Priorität: 05.07.2006 DE 102006031001
(71) Anmelder: AUDI AG, 85045 Ingolstadt (DE)
(72) Erfinder: Brandl, Hans Jürgen, 86706 Weichering (DE); Beringer, Heinrich, 85095 Denkendorf (DE); Spann, Oliver, 85055 Ingolstadt (DE)
(74) Vertreter: Asch, Konrad

(57) **Zusammenfassung**

Die Erfindung betrifft eine Radaufhängung für Kraftfahrzeuge, mit zumindest in einer Lenkerebene angeordneten Lenkern, die einerseits über Lenkerlager an der Karosserie des Kraftfahrzeuges und andererseits über Lenkerlager an einem Radträger angelenkt sind und wobei zumindest ein karosserieseitiges Lenkerlager mit asymmetrisch ausgerichteten Mitteln versehen ist, die den Lenker bei durch Bremsmomente am Rad bewirkten elastokinematischen Verlagerungen des Lenkers beeinflussen. Zur Erzielung gezielter fahrdynamischer Eigenschaften und einem guten Abrollkomfort der Radaufhängung wird vorgeschlagen, dass die Mittel (42) so ausgebildet sind, dass eine Verhärtung der Lagerkennung und/oder Verstellung des Lenkerlagers nur in einer Wirkrichtung erfolgt.

## Beschreibung

Die Erfindung betrifft eine Radaufhängung für Kraftfahrzeuge gemäß dem Oberbegriff des Patentanspruches 1.

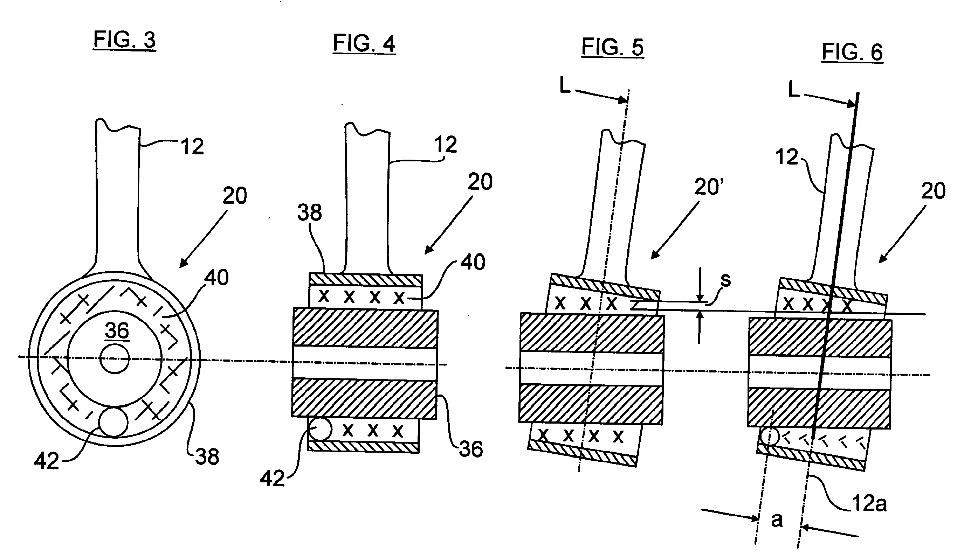

Gattungsgemäße Radaufhängungen beschreibt die JP 04345510 A, bei der sowohl für lenkbare Räder als auch für ungelenkte Räder von Kraftfahrzeugen ein karosserieseitiges Lenkerlager vorgeschlagen wird, das asymmetrisch angeordnete Mittel aufweist, die insbesondere bei einem Bremsvorgang des Kraftfahrzeuges aufgrund der auftretenden Längskräfte verbunden mit der elastokinematischen Verlagerung der Lenker einen gezielten Lenkeffekt erzeugen, der das Rad in Richtung Vorspur verstellt. Die Mittel zur Verstellung bzw. Verschiebung des betreffenden Lenkers der Radaufhängung können z. B. ein in seiner Federrate härterer Ringkörper im gummielastischen Lagerkörper (Fig. 6, 13) oder eine mit unterschiedlichem Außendurchmesser gestaltete Innenhülse (Fig. 10, 11) des Lenkerlagers sein. Die genannten Maßnahmen führen allerdings zwangsläufig zu einer den Fahrkomfort des Kraftfahrzeuges beeinträchtigenden Verminderung der Dämpfungseigenschaften des betreffenden Lenkerlagers.

Aus der EP 1 637 366 A ist eine weitere Radaufhängung bekannt, die einen aufgelösten unteren Lenkerverband mit einer Spurstange für das lenkbare Rad, einen Querlenker und eine Druckstrebe aufweist. Der Querlenker ist gegenüber der Fahrzeug-Querachse mit einem Winkel von 4° bis 20° nach vorne gepfeilt. Ein von der Spurstange und dem Querlenker gebildeter Momentanpol ist über einen Abstand bis zu 3000mm von der Radmitte entfernt.

Aufgabe der Erfindung ist es, eine gattungsgemäße Radaufhängung vorzuschlagen, die bei einer noch günstigeren Beeinflussung der elastokinematischen Eigenschaften baulich einfach und mit guten Dämpfungseigenschaften ausgebildet ist.

Diese Aufgabe wird erfindungsgemäß mit den kennzeichnenden Merkmalen des Patentanspruches 1 gelöst. Vorteilhafte Weiterbildungen der Erfindung beinhalten die weiteren Patentansprüche.

Erfindungsgemäß wird vorgeschlagen, dass die Mittel so ausgebildet sind, dass eine Verstellung und damit verbundene Verhärtung der Lagerkennung des Lenkerlagers nur in einer Wirkrichtung erfolgt. Dabei wurde erkannt, dass eine insbesondere bei einem Bremsvorgang oder bei Seitenkräften (Kurven) auftretende Verhärtung des Lenkerlagers sich nicht komfortmindernd auswirkt, während im übrigen Fahrbetrieb das Lenkerlager gute Dämpfungseigenschaften aufweisen kann.

In vorteilhafter Weiterbildung der Erfindung an einer Radaufhängung mit zumindest an der unteren Lenkerebene angeordneten Lenkern, die in einer aufgelösten Formation einen etwa quer zur senkrechten Fahrzeuglängsmitte und zur Radmitte angeordneten Traglenker, einen dahinter liegenden, schräg nach vorne außen verlaufenden Führungslenker und einen davor liegenden, etwa parallel zum Traglenker ausgerichteten, dritten Lenker (bei gelenkten Rädern einer Spurstange) aufweisen und einerseits über Lenkerlager an der Karosserie des Kraftfahrzeuges und andererseits über Kugelgelenke an dem Radträger angelenkt sind, wird vorgeschlagen, dass das karosserieseitige Lenkerlager des Traglenkers mit Mitteln versehen ist, die den Traglenker bei durch Bremsmomente und/oder Einfederbewegungen des Rades bewirkten Verlagerungen nach innen, der senkrechten Fahrzeuglängsmitte zu verstellen. Hintergrund ist dabei, dass bei einer derartigen Radaufhängung bei einer für den Fahrkomfort günstigen Auslegung der Lenkerlager (relativ weich) unerwünschte Eigenlenkbewegungen vermieden und ggf. ein gezieltes auf Nachspur gehen des Rades eingestellt wird (vorteilhaftes Untersteuern beim Bremsen und in Kurven).

Ferner kann bei einer wie vorstehend aufgeführten Radaufhängung mit aufgelösten Lenkern das karosserieseitige Lenkerlager des Traglenkers mit Mitteln versehen sein, die den Traglenker bei durch Bremsmomente und/oder Einfederbewegungen des Rades bewirkten Verlagerungen in Fahrtrichtung F nach vorne, dem karosserieseitigem Lenkerlager des dritten Lenkers (Spurstange 16) zu verstellen. Daraus resultiert, dass der durch den dritten Lenker und den Traglenker durch deren gedachte Verlängerungen definierte Momentanpol sich verändert und so verlagert wird, dass ebenfalls ein vorteilhaftes Untersteuern beim Durchfahren von Kurven auftritt.

Wie aus der Vorbeschreibung hervorgeht, erfolgt erst bei Einwirken von Längs- und/oder Seitenkräften eine Verschiebung der Momentanpollage. So kann der Momentanpol in Konstruktionslage bei ruhendem Fahrzeug oder im Zustand stationärer Geradeausfahrt über einen Abstand von 3000mm oder mehr von der Radmitte entfernt sein. Erst bei einer entsprechenden Kraftbeaufschlagung kann sich der Momentanpol-Abstand fahrdynamisch günstig unter 3000mm verringern.

Bei einem Momentanpol-Abstand in Konstruktionslage von mehr als 3000mm stellen sich aufgrund der nahezu parallel wirkenden Lenker (Spurstange/Querlenker) keine Vorspuränderungen ein, woraus sich eine hohe Stabilität des Fahrzeugs in der Geradeausfahrt ergibt.

Die Stabilität bei der Geradeausfahrt kann weiter erhöht werden, wenn der Tragwinkel mit einem Winkel von kleiner als 4° gegenüber der Fahrzeug-Querachse nach vorne gepfeilt ist. Das Fahrverhalten wird darüber hinaus begünstigt, wenn der Momentanpol unabhängig vom Einwirken von Seiten- und/oder Querkräften auf das Rad stets vor der Radmitte liegt.

Bei einem üblichen, rotationssymmetrischen Lenkerlager mit einer ortsfesten Innenhülse, einer lenkerseitigen Außenhülse und einem ringförmigen, gummielastischen Lagerkörper wird in baulich und fertigungstechnisch besonders einfacher Weise vorgeschlagen, dass zumindest ein drucksteifes Stellelement zwischen der Innenhülse und der Außenhülse außerhalb der verlängerten Lenkerlängsmittelachse vorgesehen ist, das nur in der vorgesehenen Wirkungsrichtung eine Lagerversteifung bzw. Lenkerverstellung bewirkt. Das Stellelement kann aus Metall oder einem besonders harten, verschleißfesten Kunststoff hergestellt sein.

Das drucksteife Stellelement kann insbesondere zumindest ein in den gummielastischen Lagerkörper eingebettetes Wälzelement sein, das somit nahezu verschleiß- und reibungsfrei wirkt, insbesondere bei Durchfederbewegungen mit entsprechender Torsionsbeanspruchung der Lenkerlager der Radaufhängung.

Insbesondere kann das zumindest eine Wälzelement sphärische Kontaktflächen zur Innenhülse und Außenhülse des Lenkerlagers aufweisen, also als Kugel oder tonnenförmige Rolle, etc. ausgeführt sein.

Zur gezielten Veränderung des besagten Momentanpols zwischen dem dritten Lenker und dem Traglenker kann das drucksteife Stellelement vorteilhaft an der Innenhülse und/oder der Außenhülse des Lenkerlagers in einer zu einer Rotationsebene schrägen Gleitbahn zur Verlagerung des Lenkers in Axialrichtung geführt sein.

Des weiteren kann zur Erreichung einer gezielten Kinematik das Lenkerlager durch zumindest zwei benachbart angeordnete Lenkerlager gebildet sein, von denen das eine Lenkerlager mit den Mitteln zur Verlagerung des Lenkers versehen ist.

Alternativ kann die Innenhülse oder die Außenhülse des Lenkerlagers asymmetrisch ausgebildet sein, wobei diese so auszubilden sind, dass wiederum eine Verstellung und damit verbunden Verhärtung der Lagerkennung des Lenkerlagers nur in einer Wirkrichtung erfolgt.

Kinematisch besonders vorteilhaft können aber die asymmetrisch ausgebildete Innenhülse und/oder Außenhülse mit zumindest einem drucksteifen Stellelement kombiniert sein. Damit gelingt es, nicht nur beim Bremsvorgang des Kraftfahrzeuges (Kippbewegung des Lenkers), sondern auch bei Durchfederbewegungen (Schwenkbewegung des Lenkers) eine gezielte Verlagerung des Lenkers und damit verbunden Eigenlenkbewegungen im elastokinematischen Bereich der Radaufhängung aufzuprägen.

Ein Ausführungsbeispiel der Erfindung ist im folgenden mit weiteren Einzelheiten näher erläutert. Die schematische Zeichnung zeigt in:
- Fig. 1: eine Draufsicht auf die untere Lenkerebene einer Radaufhängung für Kraftfahrzeuge mit aufgelöster Formation der Lenker und Darstellung der Lenkerbeanspruchungen bei Seitenkräften S;
- Fig. 2: die gleiche Ansicht der Radaufhängung gemäß Fig. 1, mit Darstellung der Lenkerbeanspruchungen bei Bremskräften B;
- Fig. 3: einen Querschnitt durch das karosserieseitige Lenkerlager des Traglenkers der Radaufhängung gemäß den Fig. 1 und 2, mit in das Lenkerlager integrierten Mitteln zur gezielten Verlagerung des Traglenkers;
- Fig. 4: einen Schnitt gemäß Linie IV - IV der Fig. 3 durch das Lenkerlager;
- Fig. 5 u. 6: im Vergleich die Verlagerung des Traglenkers bei einem Bremsvorgang des Kraftfahrzeuges an einem herkömmlichen Lenkerlager (Fig. 5) und dem Lenkerlager gemäß den Fig. 1 bis 4 bzw. mit den Mitteln zur Verstellung des Traglenkers (Fig. 6); und
- Fig. 7: ein durch zwei getrennt ausgeführte Lager ausgebildetes Lenkerlager, von denen das eine mit Mitteln zur Verlagerung des Traglenkers ausgeführt ist.

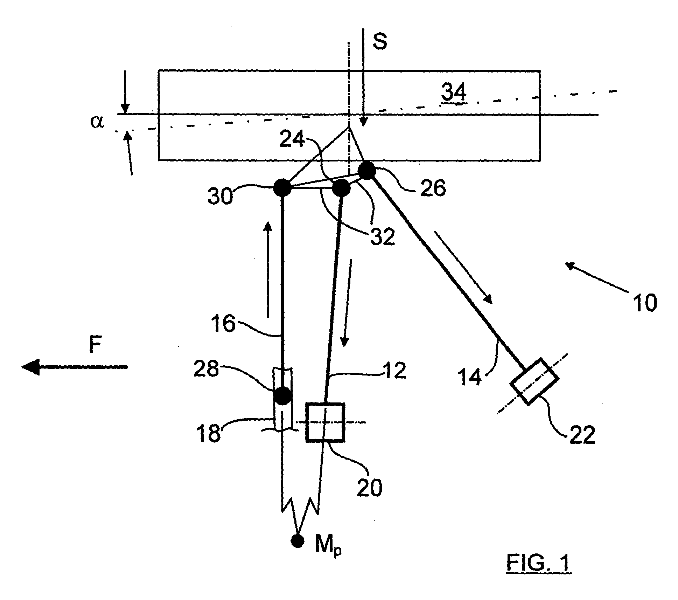

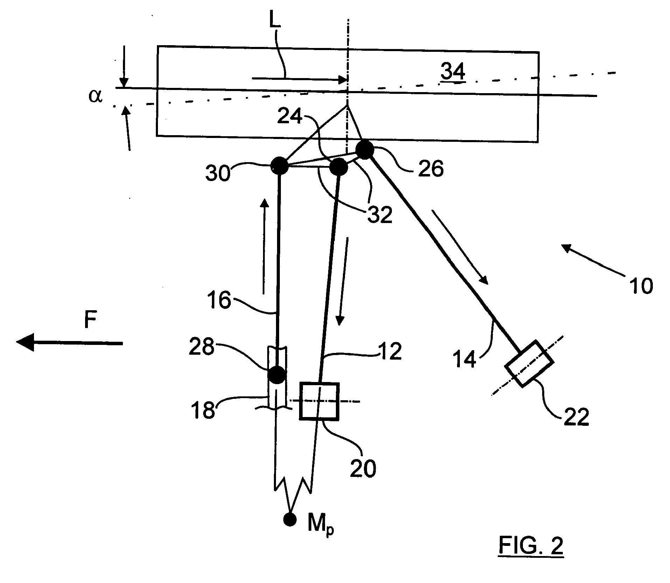

In den **Fig. 1 und 2** ist die untere Lenkerebene einer Radaufhängung 10 für die gelenkten Räder eines Kraftfahrzeuges diagrammartig dargestellt, mit einem etwa quer zur senkrechten Fahrzeugmittelachse und in Radmitte ausgerichteten Traglenker 12, einem in Fahrtrichtung F des Kraftfahrzeuges gesehen dahinter liegenden, schräg nach vorne und außen verlaufenden Führungslenker 14 und einer vorne liegenden, etwa parallel zum Traglenker 12 verlaufenden Spurstange 16 einer nicht näher dargestellten Zahnstangenlenkung 18. Bei einer Radaufhängung mit nicht gelenkten Rädern (Hinterachse) kann die Spurstange 16 durch einen dritten Lenker gebildet sein.

Die gedachten Verlängerungen (strichpunktierte Linien) der Spurstange 16 und des Traglenkers 12 bilden einen Momentanpol Mp, der wie aus den **Fig. 1 und 2** ersichtlich um ein definiertes Maß innerhalb des linken Rades 34 der dargestellten Radaufhängung 10 und vor der Radmitte liegt.

Wie ferner ersichtlich ist, sind die Lenker 12, 14 in einer aufgelösten Formation angeordnet, mit Lenkerlagern 20, 22, die an der nicht dargestellten Karosserie des Kraftfahrzeuges angelenkt sind, und mit Lenkerlagern bzw. Kugelgelenken 24, 26, die an einem nur angedeuteten Radträger 32 angelenkt sind, der das im Ausführungsbeispiel linke Vorderrad 34 des Kraftfahrzeuges in bekannter Weise aufnimmt. Ferner ist die Spurstange 16 über Kugelgelenke 28, 30 mit einem Lenkarm des Radträgers 32 und mit der Zahnstange der Zahnstangenlenkung 18 gelenkig verbunden.

Es sei bemerkt, dass die Radaufhängung auch in der oberen Lenkerebene (nicht dargestellt) eine aufgelöste Lenkerformation oder einen Einzellenker aufweisen kann. Die Tragfeder oder ein Federbein mit Stoßdämpfer der Radaufhängung sind nicht dargestellt; beispielsweise kann ein Federbein an dem Traglenker 12 abgestützt sein. Die Kugelgelenke 24, 26, 28, 30 können bekannter Bauart sein. Die karosserieseitigen Lenkerlager 20, 22 sind - soweit nachstehend nicht anders beschrieben - übliche Gummi-Metall-Hülsenlager (z. B. gemäß **Fig. 5**).

In der **Fig. 1** ist die Beanspruchung der Lenker 12, 14 und der Spurstange 16 bei einer Seitenkraft S auf das Rad 34 und den Radträger 32 durch Pfeile dargestellt. Eine erhöhte Seitenkraft S tritt z.B. beim Durchfahren von Kurven an dem jeweils kurvenäußeren Rad 34 auf. In der Darstellung ist aber der jeweilige Lenkeinschlag aus Vergleichszwecken unberücksichtigt.

Wie ersichtlich ist, tritt bei Seitenkräften S an den Lenkern 12, 14 eine Druckkraft (Pfeile auf der Zeichnung **Fig. 1** nach unten) und an der Spurstange 16 eine entgegengerichtete Zugkraft auf. Dies führt durch die Lagerelastizitäten insbesondere der Lenkerlager 20, 22 zu einer elastokinematischen Radverstellung (strichpunktierte Linie) auf Nachspur (Spurwinkel α, übertrieben dargestellt), verbunden mit einem erwünschten kurvenuntersteuernden Fahrverhalten der Radaufhängung 10 bzw. des Kraftfahrzeuges.

In der **Fig. 2** ist die Beanspruchung der Lenker 12, 14 und der Spurstange 16 der Radaufhängung beim Abbremsen des Kraftfahrzeuges erläutert. Die entsprechende Scheibenbremse am Radträger 32 bzw. Rad 34 ist nicht dargestellt und üblicher Auslegung und Anordnung.

Wie gezeigt wirkt nun durch die auftretende Längskraft L am Rad 34 und am Radträger 32 auf den Traglenker 12 eine Zugkraft (Pfeil auf der Zeichnung **Fig. 2** nach oben), während auf den Führungslenker 14 unverändert eine Druckkraft und auf die Spurstange 16 eine Zugkraft ausgeübt wird. Dies würde aufgrund der elastokinematischen Eigenschaften eine Verstellung des Rades 34 in Richtung Vorspur (nicht eingezeichnet) bewirken.

Um der Tendenz der elastokinematischen Verstellung des Rades 34 beim Bremsen und zusätzlich bei Seitenkräften S entgegenzuwirken oder bevorzugt eine Verstellung des Rades 34 auf Nachspur α (gemäß **Fig. 1**) aufzuprägen, ist das Lenkerlager 20 des Traglenkers 12 gemäß den **Fig. 3, 4, 6 oder 7** ausgeführt.

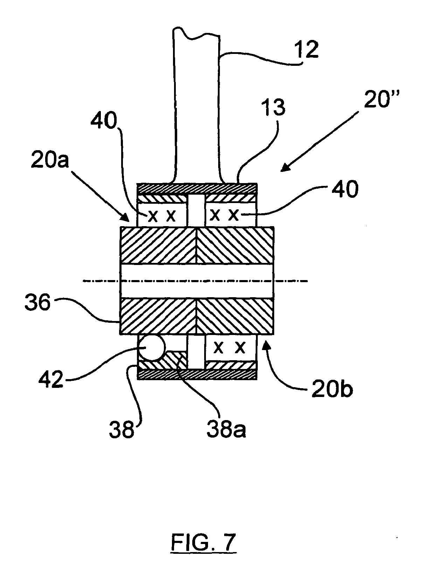

Das Lenkerlager 20 (und auch 22) setzt sich zunächst in an sich bekannter Weise aus einer mittels einer nicht dargestellten Schraube an einem karosserieseitigen Lagerbock befestigten Innenhülse 36, einer am Traglenker 12 befestigten Außenhülse 38 und einem dazwischen angeordneten, gummielastischen und ringförmigen Lagerkörper 40 zusammen. Der Lagerkörper 40 z.B. aus einem geeigneten Elastomer ist mit der Innenhülse 36 und der Außenhülse 38 durch Vulkanisation fest verbunden und weist in üblicher Weise eine definierte Feder-Dämpfungsrate auf, die einen guten Abrollkomfort des Kraftfahrzeuges sicherstellt. Die Außenhülse 38 kann auch in ein Lagerauge 13 **(Fig. 7)** des Traglenkers 12 eingepresst sein.

In das Lenkerlager 20 bzw. in dessen Lagerkörper 40 ist als Mittel zur gezielten Verhärtung des Traglenkers 12 entgegen der besagten Zugrichtung beim Bremsen eine drucksteife bzw. metallische Kugel 42 integriert, die an der Innenhülse 36 und an der Außenhülse 38 bei unbelastetem Lenkerlager 20 anläuft und die diametral gegenüber dem Anschluss des Traglenkers 12 an der Außenhülse 38 positioniert ist. Die Kugel 42 kann insbesondere in den Lagerkörper 40 formschlüssig eingebettet und deshalb unverlierbar gehalten sein.

Bei einer Druckbelastung (gemäß **Fig. 1)** des Traglenkers 12 bzw. des Lenkerlagers 20 ist die Kugel 42 wirkungslos und hebt ggf. von der Innenhülse 36 und/oder der Außenhülse 38 ab. Die Feder- und Dämpfungseigenschaften des Lenkerlagers 20 bleiben somit im wesentlichen unverändert.

Bei einer Zugbelastung des Traglenkers 12 in einem definiertem Ausmaß legt sich die Kugel 42 an der Innenhülse 36 und der Außenhülse 38 an und bewirkt nunmehr eine Verhärtung des Lenkerlagers 20 in der Zugrichtung.

Das Mittel zur Verhärtung und Verlagerung des Lenkerlagers 20 bzw. die Kugel 42 ist ferner außerhalb der verlängerten Längsachse 12a des Traglenkers 12 derart angeordnet (vgl. **Fig. 4 und 6),** dass die Kugel 42 zur Längsmittelachse 12a einen Hebelarm a bildet.

Dieser Hebelarm a bewirkt zusätzlich eine Verlagerung des Traglenkers 12 entgegen der Zugbeanspruchung beim Bremsen, da aufgrund der Längskräfte L der Traglenker 12 entgegen der Fahrtrichtung F nach hinten um die Hochachse des Lenkerlagers 20 verschwenkt wird (in **Fig. 6** übertrieben dargestellt). Der Traglenker 12 wird somit über das drucksteife Mittel bzw. die Kugel 42 um den Stellweg s im Vergleich zu einem herkömmlichen Lenkerlager 20' (vgl. **Fig. 5)** nach innen verstellt. Dies bewirkt an dem Rad 34 der Radaufhängung 10 ein auf Nachspur gehen (Spurwinkel α), wie in der **Fig. 2** dargestellt.

Wie des weiteren die **Fig. 3** zeigt, ist die Innenhülse 36 des Lenkerlagers 20 nicht rotationssymmetrisch, sondern asymmetrisch derart ausgeführt, dass sie über die Kugel 42 eine zusätzliche Verlagerung des Traglenkers 12 nach innen der Fahrzeugmitte zu bewirkt. Die Innenhülse 36 (und ggf. die Außenhülse 38) kann dabei nockenförmig oder als Excenter (wie dargestellt) ausgeführt sein und ausgehend von einer Konstruktionslage (mittlere Höhenlage des Kraftfahrzeuges) der Radaufhängung 10 bei einer zunehmenden Torsionsbelastung des Lenkerlagers 20 (beim Einfedern des Rades 34) eine weitere, gezielte Verlagerung des Traglenkers 12 mit entsprechend vergrößertem Verstellweg s (im Vergleich zu **Fig. 5)** steuern. Die asymmetrische Gestaltung der Innenhülse 36 kann durchgehend oder nur im Bereich der Kugel 42 vorgesehen sein.

Die **Fig. 7** zeigt ein weiteres Ausführungsbeispiel des karosserieseitigen Lenkerlagers 20" des Traglenkers 12, das sich aus zwei separaten Lenkerlagern 20a und 20b zusammensetzt. Gleiche Teile sind mit gleichen Bezugszeichen versehen.

Das Lenkerlager 20b ist herkömmlich ausgeführt, also entsprechend der vorbeschriebenen **Fig. 5** mit einer Innenhülse 36, einer Außenhülse 38 und einem gummielastischem Lagerkörper 40 ausgeführt.

Hingegen weist das axial benachbarte Lenkerlager 20a wiederum das Wälzelement bzw. die metallische Kugel 42 auf, die an der Innenhülse 36 und an der Außenhülse 38 bei unbelastetem Lenkerlager 20a anläuft und die diametral gegenüber dem Anschluss des Traglenkers 12 an der Außenhülse 38 positioniert ist. Die Kugel 42 läuft zusätzlich an einer in die Außenhülse 38 eingearbeiteten Gleitbahn 38a an, die schräg zu einer gedachten Rotationsebene verläuft, und zwar derart, dass sie bei einem Einfedern des Rades 34 bzw. bei einem entsprechenden Verschwenken des Traglenkers 12 den karosserieseitigen Lagerpunkt des Traglenkers 12 bzw. das Lenkerlager 20" nach vorne, dem Lenkerlager 28 der Spurstange 16 zu verschiebt.

Daraus resultiert eine Verkürzung des Abstandes des Momentanpoles Mp zur Radmitte des Rades 34, verbunden mit einer entsprechenden Untersteuertendenz des Kraftfahrzeuges beim Durchfahren von Kurven.

Die Erfindung ist nicht auf das dargestellte Ausführungsbeispiel beschränkt. Anstelle einer Radaufhängung 10 mit aufgelöster Lenkerformation kann auch eine andere Radaufhängung verwendet sein, bei der beim Bremsvorgang und/oder bei Seitenkräften eine Umkehrung der Zug- und Druckkräfte an zumindest einem Lenker bzw. Lenkerlager auftreten kann. Die Radaufhängung 10 kann sowohl als gelenkte Vorderradaufhängung oder als ungelenkte Hinterradaufhängung ausgeführt sein.

Anstelle einer oder mehrerer Kugeln 42 können als drucksteife Mittel auch eine oder mehrere Rollen oder Gleitstücke, ggf. auch aus einem härteren, verschleißfestem Kunststoff, eingesetzt sein. Die drucksteifen Mittel können ggf. unmittelbar an die Innenhülse 36 oder an die Außenhülse 38 angeformt sein.

## Patentansprüche

1. Radaufhängung für Kraftfahrzeuge, mit zumindest in einer Lenkerebene angeordneten Lenkern, die einerseits über Lenkerlager an der Karosserie des Kraftfahrzeuges und andererseits über Lenkerlager an einem Radträger angelenkt sind und wobei zumindest ein karosserieseitiges Lenkerlager mit asymmetrisch ausgerichteten Mitteln versehen ist, die den Lenker bei durch Bremsmomente am Rad bewirkten Verlagerungen beeinflussen, **dadurch gekennzeichnet, dass** die Mittel (42) so ausgebildet sind, dass eine Verhärtung der Lagerkennung und/oder Verstellung des Lenkerlagers (20) nur in einer Wirkrichtung erfolgt.

2. Radaufhängung insbesondere nach Anspruch 1, mit zumindest in der unteren Lenkerebene angeordneten Lenkern (12, 14, 16), die in einer aufgelösten Formation einen etwa quer zur senkrechten Fahrzeuglängsmitte und zur Radmitte angeordneten Traglenker (12), einen dahinter liegenden, schräg nach vorne außen verlaufenden Führungslenker (14) und einen davor liegenden, etwa parallel zum Traglenker (12) ausgerichteten, dritten Lenker (Spurstange 16) aufweisen und einerseits über Lenkerlager (20, 22, 28) an der Karosserie des Kraftfahrzeuges und andererseits über Lenkerlager (24, 26, 30) an dem Radträger (32) angelenkt sind, **dadurch gekennzeichnet, dass** das karosserieseitige Lenkerlager (20) des Traglenkers (12) mit Mitteln (42) versehen ist, die den Traglenker (12) bei durch Bremsmomente und/oder Einfederbewegungen des Rades (34) bewirkten Verlagerungen nach innen, der senkrechten Fahrzeuglängsmitte zu verstellen.

3. Radaufhängung insbesondere nach Anspruch 1 oder 2, mit zumindest in der unteren Lenkerebene angeordneten Lenkern (12, 14, 16), die in einer aufgelösten Formation einen etwa quer zur Fahrzeuglängsmitte und zur Radmitte angeordneten Traglenker (12), einen dahinter liegenden, schräg nach vorne außen verlaufenden Führungslenker (14) und einen davor liegenden, etwa parallel zum Traglenker (12) ausgerichteten, dritten Lenker (Spurstange 16) aufweisen und einerseits über Lenkerlager (20, 22, 28) an der Karosserie des Kraftfahrzeuges und andererseits über Lenkerlager (24, 26, 30) an dem Radträger (32) angelenkt sind, **dadurch gekennzeichnet, dass** das karosserieseitige Lenkerlager (20) des Traglenkers (12) mit Mitteln (42) versehen ist, die den Traglenker (12) bei durch Bremsmomente und/oder Einfederbewegungen des Rades (34) bewirkten Verlagerungen in Fahrtrichtung F nach vorne, dem karosserieseitigen Lenkerlager (28) des dritten Lenkers (Spurstange 16) zu verstellen.

4. Radaufhängung nach Anspruch 2 oder 3, **dadurch gekennzeichnet, dass** der Traglenker (12) mit einem Winkel von kleiner als 4° gegenüber der Fahrzeug-Querachse nach vorne gepfeilt ist.

5. Radaufhängung nach einem der Ansprüche 2 bis 4, **dadurch gekennzeichnet, dass** der Traglenker (12) mit dem dritten Lenker (Spurstange 16) einen Momentanpol (Mp) bildet, der in Konstruktionslage bei ruhendem Fahrzeug oder bei stationärer Geradeausfahrt in einem Abstand von der Radmitte entfernt ist, der größer als 3000mm ist.

6. Radaufhängung nach einem der Ansprüche 2 bis 5, **dadurch gekennzeichnet, dass** bei Einwirken von Längs- und/oder Seitenkräften auf das Rad der Momentanpol (Mp) in einem Abstand von der Radmitte entfernt ist, der kleiner als 3000mm ist.

7. Radaufhängung nach einem der vorhergehenden Ansprüche 2 bis 6, **dadurch gekennzeichnet, dass** der Momentanpol (Mp) unabhängig vom Einwirken von Seiten- oder Querkräften auf das Rad vor der Radmitte liegt.

8. Radaufhängung nach einem der vorhergehenden Ansprüche, **dadurch gekennzeichnet, dass** bei einem rotationssymmetrischen Lenkerlager (20) mit einer ortsfesten Innenhülse (36), einer lenkerseitigen Außenhülse (38) und einem ringförmigen, gummielastischen Lagerkörper (40) zumindest ein drucksteifes Stellelement (42) zwischen der Innenhülse (36) und der Außenhülse (38) außerhalb der verlängerten Lenkerlängsmitte (12a) vorgesehen ist.

9. Radaufhängung nach Anspruch 8, **dadurch gekennzeichnet, dass** das drucksteife Stellelement zumindest ein in den gummielastischen Lagerkörper (40) eingebettetes Wälzelement (42) ist.

10. Radaufhängung nach Anspruch 9, **dadurch gekennzeichnet, dass** das zumindest eine Wälzelement (42) sphärische Kontaktflächen zur Innenhülse (36) und Außenhülse (38) des Lenkerlagers (20) aufweist.

11. Radaufhängung nach einem der Ansprüche 4 bis 10, **dadurch gekennzeichnet, dass** das drucksteife Stellelement (42) an der Innenhülse (36) und/oder an der Außenhülse (38) des Lenkerlagers (20) in einer zu einer Rotationsebene schrägen Gleitbahn (38a) zur Verlagerung des Lenkers in Axialrichtung geführt ist.

12. Radaufhängung nach einem der vorhergehenden Ansprüche, **dadurch gekennzeichnet, dass** das Lenkerlager (20) durch zumindest zwei benachbart angeordnete Lenkerlager (20a, 20b) gebildet ist, von denen das eine Lenkerlager (20a) mit den Mitteln (42) zur Verlagerung des Lenkers (12) versehen ist.

13. Radaufhängung nach einem der Ansprüche 4 bis 12, **dadurch gekennzeichnet, dass** die Innenhülse (36) und/oder die Außenhülse (38) des Lenkerlagers (20) asymmetrisch ausgebildet sind.

14. Radaufhängung nach Anspruch 13, **dadurch gekennzeichnet, dass** die asymmetrisch ausgebildete Innenhülse (36) und/oder Außenhülse (38) mit zumindest einem drucksteifen Stellelement (42) kombiniert ist.
